Europäisches Patentamt

European Patent Office

Office européen des brevets

(19)

(11) Publication number: **0 331 162**

**A2**

# EUROPEAN PATENT APPLICATION

(12)

(21) Application number: **89103652.7**

(22) Date of filing: **02.03.89**

(51) Int. Cl.⁴: **H04L 11/20 , H04B 7/185**

(30) Priority: **03.03.88 JP 48623/88**

(43) Date of publication of application:
**06.09.89 Bulletin 89/36**

(84) Designated Contracting States:
**DE FR GB**

(71) Applicant: **NEC CORPORATION**
**33-1, Shiba 5-chome, Minato-ku**
**Tokyo 108(JP)**

(72) Inventor: **Ujiie, Mikio c/o NEC Corporation**
**33-1, Shiba 5-chome Minato-ku**
**Tokyo(JP)**

(74) Representative: **Vossius & Partner**
**Siebertstrasse 4 P.O. Box 86 07 67**
**D-8000 München 86(DE)**

(54) **Functional mode information communication in a radio communication network.**

(57) In a terminal station (11-1), a memory is used to memorize a functional mode information signal representative of a functional mode which is characterized by a specific feature of either hardware or software used in the terminal station and in which the terminal station is operable. A terminal communication section (18) receives a transfer request signal from a central control station (10) through a radio channel and delivers the transfer request signal to a reading circuit. The transfer request signal is representative of a request of transfer of the functional mode information signal to the central control station. The functional mode information signal is read out of the memory by the reading circuit and is transmitted by the terminal communication section to the central control station through the radio channel. In the central control station, the transfer request signal may be produced by a functional mode information management circuit (45). A central communication section (14) transmits the transfer request signal to the terminal station through the radio channel and receives the functional mode information signal to deliver the functional mode information signal to the functional mode information management circuit, which manages the functional mode information signal.

FIG. 1

# FUNCTIONAL MODE INFORMATION COMMUNICATION IN A RADIO COMMUNICATION NETWORK

This invention relates to a functional mode information communicating arrangement for use in a terminal station of a radio communication network comprising a central control station. This invention relates also to a functional mode information communicating arrangement for use in the central control station and to a functional mode information communicating system for use in the radio communication network.

A recent technical development of a computer equipment and a communication device has brought about a radio communication network comprising a plurality of terminal stations and a central control station. Such a radio communication network is classified into a small scale communication network, such as a local area network (LAN), and a large scale communication network. In the large scale communication network, communication is carried out between each of the terminal stations and the central control station through a communication satellite. The large scale communication network therefore has a communication area wider than that of the small scale communication network. In the large scale communication network, the communication area may cover either an entire area of a country or an area across a plurality of countries.

In whichever of the small scale and the large scale communication networks, the central control station and each of the terminal stations communicate various information with each other through a radio channel. Between one of the terminal stations and another of the terminal stations, communication is carried out through the central control station by the use of the radio channel.

Each of the terminal station has a functional mode characterized by a specific feature of the terminal station in question. The specific feature is, for example, a sort of hardware of the terminal station, a function of the hardware, or a version of either the hardware or a software program of the terminal station under consideration.

In order to carry out quality control of the terminal stations, centralized management is carried out as regards the functional modes of the terminal stations. Conventionally, such centralized management of the functional modes of the terminal stations must be carried by personal observation of either test records of the terminal stations or the terminal stations themselves.

Such a conventional centralized management method is, however, defective in that the personal observation enormously increases when the number of the terminal stations increases in the radio communication network.

It is therefore an object of this invention to provide a functional mode information communicating arrangement for use in a terminal station of a radio communication network, which makes it possible to facilitate centralized management of a functional mode of the terminal station.

It is another object of this invention to provide a functional mode information communicating arrangement of the type described, which makes it possible to realize automatical centralized management of the functional mode of the terminal station.

It is still another object of this invention to provide a functional mode information communicating arrangement for use in a central control station of a radio communication network comprising a terminal station, which makes the central control station possible to carry out automatical centralized management of a functional mode of the terminal station.

It is a further object of this invention to provide a functional mode information system for use in a radio communication network comprising a terminal station and a central control station, which makes the central control station readily carry out centralized management of a functional mode of the terminal station.

It is a still further object of this invention to provide a functional mode information system of the type described, which makes the central control station possible to realize automatical centralized management of the functional mode of the terminal station.

Other objects of this invention will become clear as the description proceeds.

A functional mode information communicating arrangement to which this invention is applicable is for use in a terminal station of a radio communication network comprising a central control station. The terminal and the central control stations are for carrying out communication with each other through a radio channel. According to this invention, the functional mode information communicating arrangement comprises: a memory for memorizing a functional mode information signal representative of a functional mode of the terminal station; terminal communication means for receiving a transfer request signal from the central control station through the radio channel, the transfer request signal being representative of a request of transfer of the functional mode information signal to the central control station; and reading means connected to the memory and to the terminal communication means and responsive to the transfer request signal for reading the functional mode information signal out of the memory as a read-out mode information signal. The terminal communication means is for transmitting the read-out mode information signal to the central control station through the radio channel.

Another functional mode information communicating arrangement to which this invention is applicable is for use in a central control station of a radio communication network comprising a terminal station. The central control and the terminal stations are for carrying out communication with each other through a radio channel. The terminal station has a functional mode. In this case, the functional mode information communicating arrangement comprises: a functional mode information management circuit for producing a transfer request signal representative of a request for transferring a functional mode information signal representative of the functional mode from the terminal station to the central control station as a transmitted mode information signal; and central communication means connected to the functional mode information management circuit for transmitting the transfer request signal to the terminal station through the radio channel and for receiving the transmitted mode information signal through the radio channel as a received mcde information signal to deliver the received mode information signal to the functional mode information management circuit. The functional mode information management circuit is for managing the received mode information signal delivered from the central communication means.

A functional mode information communicating system to which this invention is applicable is for use in a radio communication network for carrying out communication between a terminal station and a central control station through a radio channel. The terminal station has a functional mode. In this event, the terminal station comprises: a memory for memorizing a functional mode information signal representative of the functional mode; terminal communication means for receiving a transfer request signal from the central control station through the radio channel, the transfer request signal being representative of a request of transfer of the functional mode information signal to the central control station; and reading means connected to the memory and to the terminal communication means and responsive to the transfer request signal for reading the functional mode information signal out of the memory as a read-out mode information signal. The terminal communication means is for transmitting the read-out mode information signal to the central control station through the radio channel as a transmitted mode information signal. The central control station comprises: a functional mode information management circuit for producing the transfer request signal; and central communication means connected to the functional mode information management circuit for transmitting the transfer request signal to the terminal station through the radio channel and for receiving the transmitted mode information signal through the radio channel as a received mode information signal to deliver the received mcde information signal to the functional mode information management circuit. The functional mode information management circuit is for managing the received mode information signal delivered from the central communication means.

The invention is further described in connection with the drawings in which

Fig. 1 is a block diagram of a functional mode information communicating system according to an embodiment of an aspect of this invention;

Fig. 2 shows frequency allocation of a radio channel used in the functional mode information communicating system illustrated in Fig. 1;

Fig. 3 shows frame structures of upward and downward signals which are used in communication between a first terminal station and a central control station in the functional mode information communicating system illustrated in Fig. 1;

Fig. 4 is a block diagram of a central communication device of a central control station of the functional mode information communicating system illustrated in Fig. 1;

Fig. 5 is a block diagram of a terminal communication device of a first terminal station of the functional mode information communicating system illustrated in Fig. 1;

Fig. 6 is a block diagram of a main processor unit of the terminal communication device illustrated in Fig. 5; and

Fig. 7 is a block diagram of a memory unit which may be used instead of a memory unit of the main processor unit illustrated in Fig. 6.

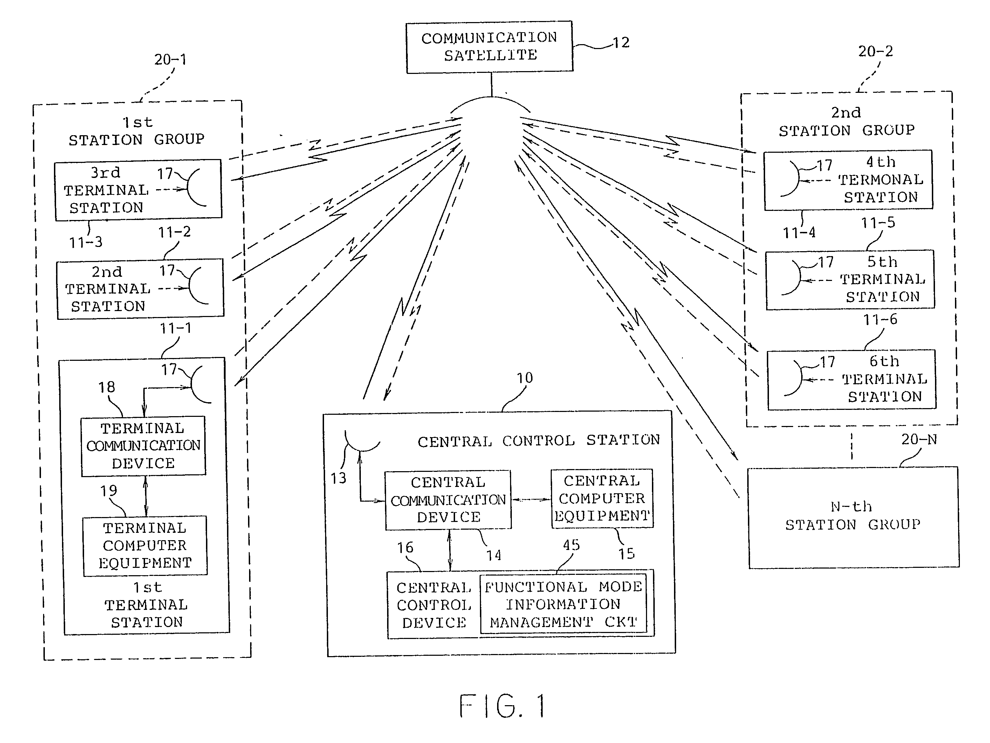

Referring to Fig. 1, a functional mode information communicating system according to a preferred embodiment of this invention is for use in a radio communication network comprising a central control station 10 and first through sixth terminal stations 11-1, 11-2, 11-3, 11-4, 11-5, and 11-6 each of which carries out communication with the central control station 10 through a communication satellite 12 by the use of a radio channel. The terminal stations 11 (suffixes omitted) are coupled to the central control station 10 through the communication satellite 12 in a STAR communication network known in the art.

The central control station 10 comprises a central antenna 13 and a central communication device 14 connected to the central antenna 13. A central computer equipment 15 and a central control device 16 are connected to the communication device 14.

Attention will be directed to the first terminal station 11-1 among the terminal stations 11. The first terminal station 11-1 comprises a terminal antenna 17 and a terminal communication device 18 connected to the terminal antenna 17. A terminal computer equipment 19 is connected to the terminal communication device 18. Although each of the second through the sixth terminal stations 11-2 to 11-6 is illustrated in Fig. 1 with only the terminal antenna 17 included in each of the second through the sixth terminal stations 11-2 to 11-6, it 'should be understood that each of the second through the sixth terminal stations 11-2 to 11-6 has a structure similar to that of the first terminal station 11-1.

Actually, the radio communication network further comprises additional terminal stations (not illustrated), each of which is similar in structure to the first terminal station 11-1. The first through the sixth terminal stations 11-1 to 11-6 and the additional terminal stations are divided into first through N-th station groups 20-1, 20-2, ..., and 20-N. The first through the third terminal stations 11-1 to 11-3 are included in the first station group 20-1 while the fourth through the sixth terminal stations 11-4 to 11-6 are included in the second station group 20-2. The N-th station group 20-N is similar in structure to each of the first and the second station groups 20-1 and 20-2 and has three terminal stations. Each of the terminal stations of the N-th station group 20-N can carry out communication with the central control station 10 through the communication satellite 12 by the use of the radio channel.

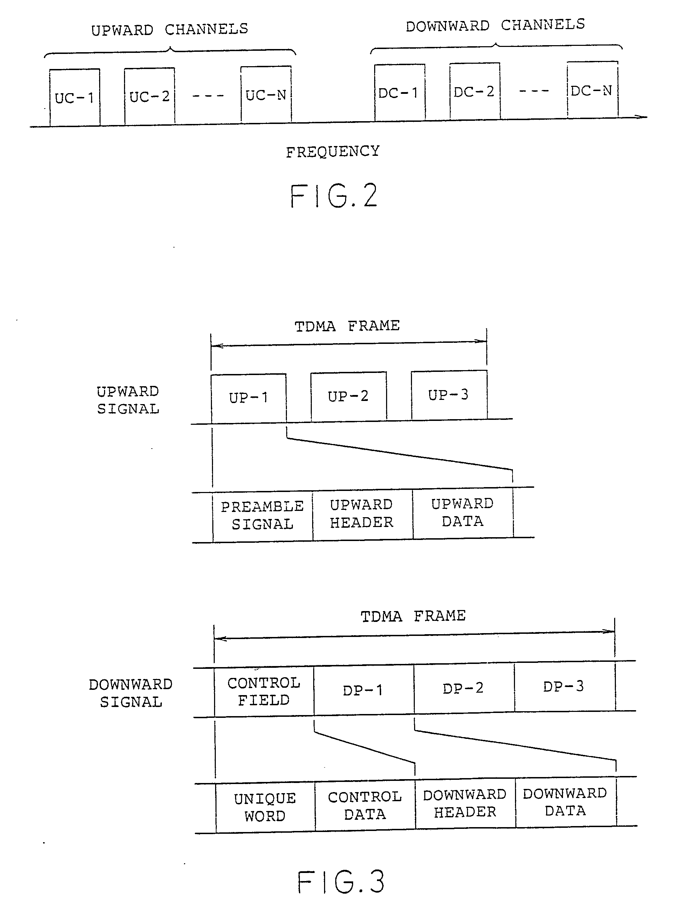

Turning to Fig. 2, description will be made as regards frequency allocation of the radio channel for communication between the central control station 10 (Fig. 1) and the terminal stations of the first through the N-th station groups 20-1 to 20-N illustrated in Fig. 1. In a low frequency region of the radio channel, first through N-th upward channels are labelled UC-1, UC-2, ..., and UC-N, respectively, and are allocated in one-to-one correspondence to the first through the N-th station groups 20-1 to 20-N. The first through the N-th upward channels UC-1 to UC-N are for use in transmitting information from the first through the N-th station groups 20-1 to 20-N to the central control station 10, respectively.

In a high frequency region which is higher than the low frequency region in the radio channel, first through N-th downward channels are labelled DC-1, DC-2, ..., and DC-N, respectively, and are allocated in one-to-one correspondence to the first through the N-th station groups 20-1 to 20-N. The first through the N-th downward channels DC-1 to DC-N are for use in transmitting information from the central control station 10 to the first through the N-th station groups 20-1 to 20-N, respectively.

More specifically, the terminal stations 11 (Fig. 1) of the first station group 20-1 carry out communication with the central control station 10 by the use of the first upward and the first downward channels UC-1 and DC-1 in a time division fashion while the terminal stations 11 of the second station group 20-2 carry out communication with the central control station 10 by the use of the second upward and the second downward channels UC-2 and DC-2 in the time division fashion. Likewise, communication is carried out between the terminal stations of the N-th station group 20-N and the central control station 10 by the use of the N-th upward and the N-th downward channels UC-N and DC-N in the time division fashion.

Turning to Fig. 3, description will proceed to an upward frame structure of an upward signal of the first upward channel UC-1 (Fig. 2) and a downward frame structure of a downward signal of the first downward channel DC-1 (Fig. 2). Although description will hereunder be made only as regards frame structures of the upward and the downward signals of the first upward and the first downward channels UC-1 and DC-1, it should be understood that each of the upward signals of the second through the N-th upward channels UC-2 to UC-N has a frame structure similar to that of the upward signal of the first upward channel UC-1 and that each of the downward signals of the second through the N-th downward channels DC-2 to DC-N has a frame structure similar to that of the downward signal of the first downward channel DC-1.

The first upward channel UC-1 is used in a time division fashion of a TDMA (time division multiple access) mode by the terminal stations 11 (Fig. 1) of the first station group 20-1 (Fig. 1). As depicted along a first or top line, the upward signal has, in a TDMA frame, for example, three upward packets, namely, first through third upward packets labelled UP-1, UP-2, and UP-3, respectively. Each of the first through the third upward packets UP-1, UP-2, and UP-3 has a burst shape. In a sequential access mode which will become clear as the description proceeds, the first through the third upward packets UP-1 to UP-3 are transmitted by the first through the third terminal stations 11-1 to 11-3 of the first station group 20-1 through the first upward channel UC-1, respectively.

As depicted along a second line from the top, the first upward packet UP-1 comprises a preamble signal, an upward header, and upward data directed to either the central control station 10 or a specific one of the terminal stations except the first terminal station 11-1 in the radio communication network illustrated in Fig. 1. The preamble signal is representative of a start of the first upward packet UP-1 as is known in the art. The upward header comprises a destination signal representative of a destination to which the upward data are directed.

Each of the second and the third upward packets UP-2 and UP-3 has a format similar to that of the first upward packet UP-1. Each of the upward packets UP (suffixes omitted) has a unit time slot.

The first downward channel DC-1 is used in a time division fashion of a continuous TDM (time division multiplexing) mode for the terminal stations 11 of the first station group 20-1. As depicted along a third line, the downward signal has a control field and, for example, three downward packets, namely, first through third downward packets, in a TDM frame. The first through the third downward packets are labelled DP-1, DP-2, and DP-3, respectively.

As depicted along a fourth line, the control field comprises a unique word and control data. The unique word is for giving a common time base to the terminal stations 11 of the first station group 20-1. The control data are directed to each of the terminal stations 11 of the first station group 20-1 for controlling operation of each of the terminal stations 11 of the first station group 20-1. The first downward packet DP-1 comprises a downward header and downward data directed to one of the terminal stations 11 of the first station group 20-1. The downward header comprises a destination signal representative of a destination to which the downward data are directed. The destination signal is representative of, for example, a station code of the above-mentioned one of the terminal stations 11 of the first station group 20-1 as the destination.

Each of the second and the third downward packets DP-2 and DP-3 has a format similar to that of the first downward packet DP-1. Each of the downward packets DP (suffixes omitted) has another unit time slot.

As mentioned above, the first through the third terminal stations 11-1 to 11-3 of the first station group 20-1 access the unit time slots for the first through the third upward packets UP-1 to UP-3 on carrying out communication with the central control station 10, respectively. That is, the unit time slots for the first through the third upward packets UP-1 to UP-3 are used in the sequential access mode. However, the unit time slots for the first through the third upward packets UP-1 to UP-3 may be used in a random access mode in which any one of the first through the third terminal stations 11-1 to 11-3 accesses any one of the unit time slots for the first through the third upward packets UP-1 to UP-3 on carrying out communication with the central control station 10. The unit time slots for the upward packets UP may also be used in a reserved mode which will later be described.

In a case where the unit time slot for each of the upward packets UP is used by one of the terminal stations 11 of the first station group 20-1 in the random access mode, this one of the terminal stations 11 of the first station group 20-1 can transmit a particular packet by the use of the unit time slot for any one of the upward packets UP. It will be assumed that the second terminal station 11-2 of the first station group 20-1 transmits the particular packet towards the central control station 10 by the use of the random access mode. In this event, the central control station 10 has to transmit a delivery confirmation informing signal for informing the second terminal station 11-2 that the central control station 10 receives the particular packet without collision with another packet which is transmitted by either the first terminal station 11-1 or the third terminal station 11-3. For this purpose, the delivery confirmation informing signal is transmitted to the second terminal station 11-2 by the central control station 10 with the delivery confirmation informing signal included or kept in the control data of the control field of the downward signal when the central control station 10 receives the particular packet without the collision.

Description will proceed to the reserved mode. The reserved mode is used when a block of upward data has a data length longer than a maximum length of a data block which each of the terminal stations 11 of the first station group 20-1 is capable of transmitting by the use of the unit time slot for each of the upward packets UP. That is, the reserved mode is used when at least two upward packets UP are necessary in transmitting the block of upward data from one of the terminal stations 11. It will be assumed that the first terminal station 11-1 transmits the block of upward data towards the central control station 10. In this event, the block of upward data is divided by the first terminal station 11-1 into a plurality of partial blocks each of which has a data length not longer than the maximum length. Subsequently, the first terminal station 11-1 transmits, towards the central control station 10, a leading upward packet in the random access mode with a leading one of the partial blocks included in the upward data of the leading upward packet and with the number of remaining ones of the partial blocks included in the upward header of the leading upward packet as a reservation packet number.

On receiving the leading upward packet, the central control station 10 assigns the first terminal station 11-1 with the unit time slots as assigned slots in accordance with the reservation packet number. Subsequently, the central control station 10 informs all terminal stations 11 of the first station group 20-1 by the use of the control field of the downward channel DC-1 (Fig. 2) that the assigned slots are used in the reserved mode by the first terminal station 11-1. Thereafter, the assigned slots are exclusively used in transmitting the remaining ones of the partial blocks from the first terminal station 11-1 towards the central control station 10.

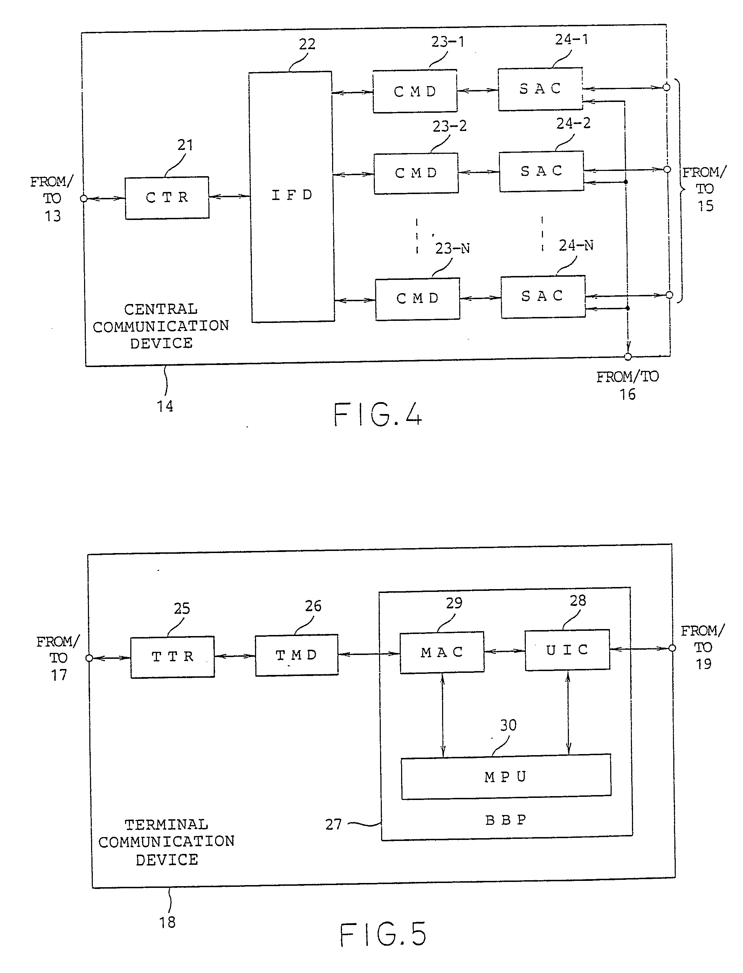

Turning to Fig. 4, the central communication device 14 of the central control station 10 (Fig. 1) comprises a central radio transceiver 21 connected to the central antenna 13. The central radio transceiver 21 is labelled CTR. An intermediate frequency divider 22 is connected to the central radio transceiver 21 and is labelled IFD. First through N-th central modems (modulating and demodulating units) 23-1, 23-2, ..., and 23-N are connected to the intermediate frequency divider 22 and are in one-to-one correspondence to the first through the N-th station groups 20-1 to 20-N. Each of the central modems 23 (suffixes omitted) is labelled CMD.

First through N-th satellite access controllers 24-1, 24-2, ..., and 24-N are connected to the first through the N-th central modems 23-1 to 23-N, respectively. Each of the satellite access controllers 24 (suffixes omitted) is labelled SAC and is also connected to the central computer equipment 15 and to the central control device 16.

The first satellite access controller 24-1 is for controlling communication carried out between the first station group 20-1 and the central control station 10 by the use of the first upward and the first downward channels UC-1 and DC-1 while the second satellite access controllers 24-2 is for controlling communication carried out between the second station group 20-2 and the central control station 10 by the use of the second upward and the second downward channels UC-2 and DC-2. Likewise, the N-th satellite access controller 24-N controls communication carried out between the N-th station group 20-N and the central control station 10 by the use of the N-th upward and the N-th downward channels UC-N and DC-N.

Turning to Fig. 5, the terminal communication device 18 of the first terminal station 11-1 (Fig. 1) comprises a terminal radio transceiver 25 connected to the terminal antenna 17. The terminal radio transceiver 25 is labelled TTR. A terminal modem 26 is connected to the terminal radio transceiver 25 and is labelled TMD.

A baseband processor 27 is labelled BBP and is connected to the terminal modem 26 and to the terminal computer equipment 19. The baseband processor 27 is for controlling communication with the first satellite access controller 24-1 (Fig. 4).

The baseband processor 27 comprises a user interface card 28 labelled UIC. The user interface card 28 is connected to the terminal computer equipment 19 and memorizes a software program for realizing a communication protocol used in the terminal computer equipment 19. The communication protocol is stored in the terminal computer equipment 19 as another software program.

Connected to the user interface card 28 and to the terminal modem 26, a media access controller 29 controls communication carried out by the use of the TDMA and the TDM modes through the first upward and the first downward channels UC-1 and DC-1, respectively. The media access controller 29 is labelled MAC and a main processor unit 30, MPU. The main processor unit 30 is connected to the user interface card 28 and to the media access controller 29 to carry out supervisory control of operation of the user interface card 28, the media access controller 29, the terminal modem 26, and the terminal radio transceiver 25.

Referring to Figs. 1, 4, and 5, description will now be made as regards communication operation between the first terminal station 11-1 and the central control station 10. The communication operation will be described at first as regards a case where the terminal computer equipment 19 of the first terminal station 11-1 generates a block of upward data that is directed to the central computer equipment 15 of the central control station 10 and that has a data length not longer than the maximum length of a data block which can be transmitted by the use of the unit time slot for each of the upward packets UP (Fig. 3).

In this case, the block of upward data is delivered to the media access controller 29 of the terminal communication device 18 through the user interface card 28. Responsive to the block of upward data, the media access controller 29 forms an upward packet which has the block of upward data and an upward header comprising a destination to which the block of upward data is directed. The upward packet is delivered to the terminal modem 26. Responsive to the upward packet, the terminal modem 26 produces an intermediate frequency signal modulated by the upward packet. The terminal radio transceiver 25 converts the intermediate frequency signal into a radio frequency signal and transmits the radio frequency signal as an upward signal through the terminal antenna 17 of the first terminal station 11-1 by the use of the first upward channel UC-1.

The upward signal is repeated by the communication satellite 12 and is received through the central antenna 13 of the central control station 10 by the central radio transceiver 21 of the central communication device 14. The central radio transceiver 21 converts the upward signal into an intermediate frequency signal. The intermediate frequency signal is delivered to the first central modem 23-1 through the intermediate frequency divider 22. The first central modem 23-1 demodulates the intermediate frequency signal into a demodulated baseband signal having the upward packet and delivers the upward packet to the first satellite access controller 24-1.

When the first satellite access controller 24-1 receives the upward packet without collision with another packet transmitted by either the second terminal station 11-2 or the third terminal station 11-3, the first satellite access controller 24-1 decodes the upward header of the upward packet to detect a destination to which the upward packet is directed. Inasmuch as the first satellite access controller 24-1 detects in this case that the upward packet is directed to the central computer equipment 15 from the first terminal station 11-1, the first satellite access controller 24-1 sends the upward packet to the central computer equipment 15.

Simultaneously, the first satellite access controller 24-1 produces the delivery confirmation informing signal directed to the first terminal station 11-1 and transmits the delivery confirmation informing signal to the first terminal station 11-1 through the first downward channel DC-1 (Fig. 2) with the delivery confirmation informing signal included in the control data of the control field of the downward signal as described in conjunction with Fig. 3.

When the media access controller 29 of the first terminal station 11-1 receives the delivery confirmation informing signal from the first downward channel DC-1 through the terminal radio transceiver 25 and the terminal modem 26, transmitting operation of the upward packet comes to an end. When the media access controller 29 of the first terminal station 11-1 can not receive the delivery confirmation informing signal a predetermined time duration after transmission of the upward packet, the media access controller 29 of the first terminal station 11-1 again transmits the upward packet to the central control station 10.

Description will proceed to another case where the terminal computer equipment 19 of the first terminal station 11-1 generates a block of upward data that has a data length longer than the maximum length of a data block which can be transmitted by the use of the unit time slot for each of the upward packets UP. In this case, use is made of the reserved mode described in conjunction with Fig. 3.

Responsive to the block of upward data sent from the terminal computer equipment 19 through the user interface card 28, the media access controller 29 of the terminal communication device 18 of the first terminal station 11-1 divides the block of upward data into a plurality of partial block which are also described in conjunction with Fig. 3. Subsequently, the media access controller 29 transmits, towards the central control station 10, a leading upward packet which has a leading one of the partial blocks and the reservation packet number described in conjunction with Fig. 3.

When the first satellite access controller 24-1 of the central control station 10 receives the leading upward packet, the first satellite access controller 24-1 assigns the first terminal station 11-1 with the assigned slots as the reserved slots for remaining ones of the partial blocks and transmits a slot assignment signal by the use of the control data of the control field of the downward channel DC-1. The slot assignment signal is for informing all of the terminal stations 11 of the first station group 20-1 that the reserved slots are used in the reserved mode by the first terminal station 11-1. Thereafter, the first satellite access controller 24-1 of the first terminal station 11-1 exclusively uses the reserved slots in transmitting the remaining ones of the partial blocks towards the central control station 10.

Description will proceed to a different case where the first terminal station 11-1 of the first station group 20-1 transmits upward data to one of the terminal stations of any one of the second through the N-th station group 20-2 to 20-N. It will be assumed that the upward data are transmitted from the first station 11-1 to the fourth terminal station 11-4 of the second station group 20-2. When received by the first satellite access controller 24-1 of the central control station 10, the upward data are delivered to the second satellite access controller 24-2 and are transmitted by the second satellite access controller 24-2 to the fourth terminal station 11-4 of the second group 20-2 as downward data by the use of the second downward channel DC-2. On receiving upward data directed to one of the fifth and sixth terminal stations 11-5 and 11-6, the central control station 10 operates in the similar manner described above. When the first satellite access controller 24-1 of the central control station 10 receives upward data directed to one of the terminal stations of the N-th station group 20-N, the upward data are delivered to the N-th satellite access controller 24-N to be transmitted, as downward data, to this one of the terminal stations of the N-th group 20-N through the N-th downward channel DC-N.

It will be presumed that the first terminal station 11-1 of the first station group 20-1 transmits upward data to one of the second and the third terminal stations 11-2 and 11-3 of the first station group 20-1. In such a case, the first satellite access controller 24-1 of the central control station 10 receives the upward data which is directed to the above-mentioned one of the second and the third terminal stations 11-2 and 11-3. The first satellite access controller 24-1 transmits the upward data back to the above-mentioned one of the second and the third terminal stations 11-2 and 11-3 through the first downward channel DC-1 as downward data.

Description will be made as regards operation of the central control station 10 in detail when data blocks directed to the terminal stations 11 of the first station group 20-1 are received by the first satellite access controller 24-1. Each of the data blocks directed to the terminal stations 11 of the first station group 20-1 is received by the first satellite access controller 24-1 from one of the central computer equipment 15, the first central modem 23-1, and the second through the N-th satellite access controllers 24-2 to 24-N. The first satellite access controller 24-1 processes the data blocks into downward packets in a reception order in which the data blocks are received by the first satellite access controller 24-1. As mentioned above, each of the downward packets has the data block and the downward header comprising a destination to which the data block is directed.

The downward packets are transmitted as a downward signal with the control field and the downward packets kept in the TDM frame by the use of the first downward channel DC-1. Such transmitting operation of the downward signal is carried out by the first satellite access controller 24-1 in cooperation with the first central modem 23-1, the intermediate frequency divider 22, and the central radio transceiver 21.

More specifically, a combination of the control field and the downward packets is delivered to the first central modem 23-1 as modem input information. Responsive to the modem input information, the first central modem 23-1 produces an intermediate frequency signal which is modulated by the modem input information and which has a carrier frequency corresponding to first downward channel DC-1. The intermediate frequency divider 22 carries out frequency-division multiplexing operation of the intermediate frequency signal and other intermediate frequency signals received from the second through the N-th central modems 23-2 to 23-N to produce a multiplexed signal. The central radio transceiver 21. carries out frequency conversion of the multiplexed signal and produces the downward signal for transmission through the central antenna 13 by the use of the first downward channel DC-1.

Description will be made as regards receiving operation of the downward signal in the terminal stations 11 of the first station group 20-1. After the downward signal is repeated by the communication satellite 12, the downward signal is received by the terminal stations 11 of the first station group 20-1.

Attention will be directed to the first terminal station 11-1. In the first terminal station 11-1, the terminal radio transceiver 25 of the terminal communication device 18 receives the downward signal through the terminal antenna 17. The terminal radio transceiver 25 converts the downward signal into an intermediate frequency signal. Responsive to the intermediate frequency signal, the terminal modem 26 demodulates the intermediate signal into a demodulated baseband signal having the downward packets.

Responsive to the demodulated baseband signal, the media access controller 29 decodes the downward header of each of the downward packets to detect a destination to which the downward packet in question is directed. Only when the media access controller 29 detects that the downward packet in question is directed to the first terminal station 11-1, the media access controller 29 delivers the downward packet to the terminal computer equipment 19 through the user interface card 28.

The media access controller 29 also detects the unique word of the control field of the demodulated baseband signal to obtain the time base of the first terminal station 11-1. The media access controller 29 furthermore detects either the delivery confirmation informing signal or the time slot assignment signal of the control data of the control field of the demodulated baseband signal to control operation on transmitting the upward packets by the use of the first upward channel UC-1.

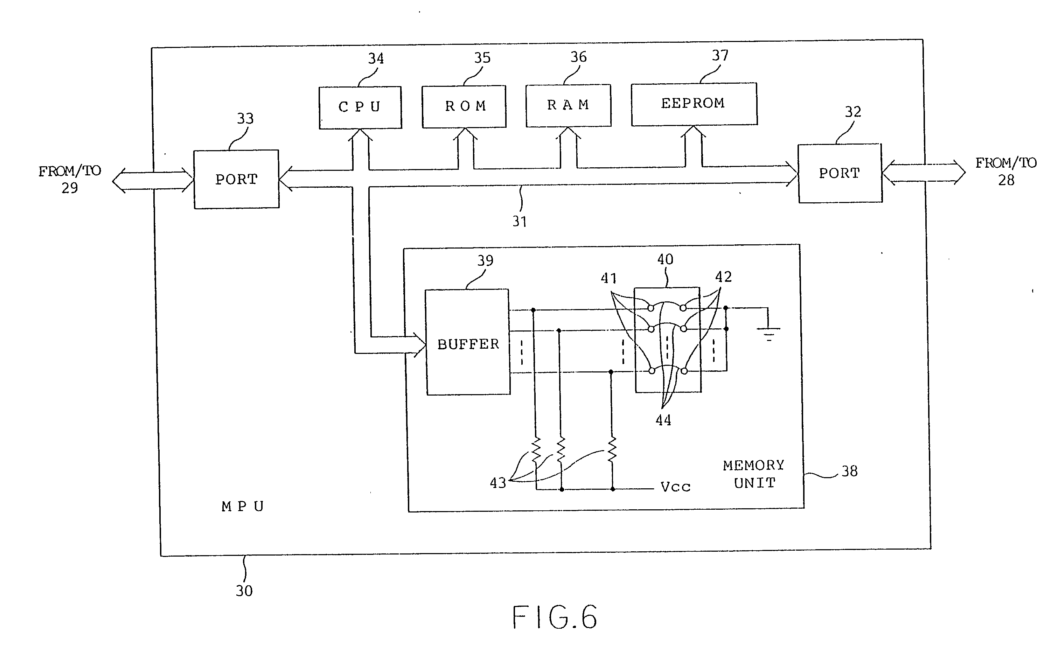

Turning to Fig. 6, the main processor unit 30 of the terminal communication device 18 of the first terminal station 11-1 comprises an internal bus 31. A port or buffer 32 is connected to the internal bus 31 and to the user interface card 28 to be operable as an interface between the internal bus 31 and the user interface card 28. Another port 33 is connected to the internal bus 31 and to the media access controller 29 and serves as another interface between the internal bus 31 and the media access controller 29.

A CPU (central processing unit) 34 is connected to the internal bus 31 to carry out supervisory control operation of the user interface card 28 and the media access controller 29. An ROM (read-only memory) 35 is connected to the internal bus 31 and memorizes a software program to make the CPU 34 carry out the supervisory control operation and other data processing operation. Connected to the internal bus 31, an RAM (random access memory) 36 is used by the CPU 34 when the CPU 34 carries out various data processing operation.

Referring to Figs. 1, 4, 5, and 6, description will be made as regards supervisory control operation which the central control device 16 of the central control station 10 carries out in order to supervise and control the terminal stations 11 of all station groups 20. In order to supervise and control the terminal stations 11 of all station groups 20, the central control device 16 carries out communication with the main processor units 30 of the terminal stations 11 of all station groups 20 through the satellite access controllers 24 of the central communication device 14, the radio channel, and the media access controllers 29 of the terminal communication devices 18 of the terminal stations 11 of all station groups.

In order to supervise and control, for example, the first terminal stations 11-1, the central control device 16 sends control data to the main processor unit 30 of the first terminal station 11-1 through the first satellite access controllers 24-1 of the central communication device 14, the first downward channel DC-1 (Fig. 2), and the media access controller 29 of the terminal communication device 18 of the first terminal station 11-1.

The control data is delivered to the CPU 34 of the main processor unit 30 through the port 33 and the internal bus 31. The CPU 34 carries out supervisory control of all constructional parts or elements of the first terminal station 11-1 in accordance with the control data and the software program memorized in the ROM 35. Result data which should be informed to the central control device 16 as a result of the supervisory control operation are sent to the central control device 16 through a reverse course in relation to a forward course through which the control data are sent from the central control device 16 to the CPU 34.

Continuously referring to Figs. 1, 4, 5, and 6, description will proceed to a functional mode information communicating arrangement for use in the first terminal station 11-1 and another functional mode information communicating arrangement for use in the central control station 10. The functional mode information communicating arrangement for use in the first terminal station 11-1 and the functional mode information communicating arrangement for use in the central control station 10 are for realizing the functional mode information communicating system. Although description will hereunder be made only as regards the functional mode information communicating arrangement for use in the first terminal station 11-1, functional mode information communicating arrangements for use in other terminal stations 11 of the radio communication network illustrated in Fig. 1 are similar in structure and in operation to the functional mode information communicating arrangement for use in the first terminal station 11-1.

The first terminal station 11-1 has a functional mode characterized by a specific feature of the first terminal station 11-1. The specific feature is, for example, a sort, a function, or a version of hardware of either the terminal communication device 18 or the terminal computer equipment 19. A version of a software program of either the terminal communication device 18 or the terminal computer equipment 19 is another example of the specific feature. Still another example of the specific feature is an identification number given to the software program of the terminal computer equipment 19.

As mentioned above, the software program is, for example, a communication protocol stored in the terminal computer equipment 19, a software program memorized in the user interface card 28 of the terminal communication device 18 for realizing the communication protocol, or another software program memorized in the ROM 35 of the main processor unit 30 of the terminal communication device 18. The media access controller 29 of the terminal communication device 18 has still another software program.

The functional mode information communicating arrangement for use in the first terminal station 11-1 comprises an EEPROM (electrically erasable programmable read-only memory) 37 connected to the internal bus 31 of the main processor unit 30 illustrated in Fig. 6. The EEPROM 37 is for memorizing a functional mode information signal representative of the functional mode of the software program as a memorized content. The functional mode information signal is representative of, for example, a code of the functional mode of the software program. The memorized content of the EEPROM 37 is updated when the software program of the first terminal station 11-1 is subjected either to functional extension or functional modification.

The functional mode information communicating arrangement for use in the first terminal station 11-1 also comprises a memory unit 38 which is connected to the internal bus 31 of the main processor unit 30 illustrated in Fig. 6. The memory unit 38 is for memorizing another functional mode information signal representative of, for example, a code of the functional mode of the hardware.

The memory unit 38 comprises a buffer 39 connected to the internal bus 31 and a printed circuit board 40 provided with a plurality of first connection terminals 41 and a plurality of second connection terminals 42 which are in one-to-one correspondence to the first connection terminals 41. The first and the second connection terminals 41 and 42 are insulated from one another. The first connection terminals 41 are connected through connection lines to the buffer 39, respectively, while the second connection terminals 42 are connected in common to the earth. The connection lines are connected through resistors 43 to a constant voltage source (not shown), respectively. The constant voltage source supplies a constant voltage Vcc to the resistors 43. Jumper lines 44 are connected between the first and the second connection terminals 41 and 42, respectively.

Each of the connection lines has a voltage equal to the earth voltage when the connection line under consideration is connected to the earth by a corresponding jumper line 44. In this state, the connection line is put into a low level state. When each of the connection lines is not connected to the earth by disconnection of the corresponding jumper line 44, the connection line under consideration has another voltage defined by the constant voltage Vcc. In this state, the connection line is put into a high level state.

Thus, each of the connection lines is put into the low level state by connecting a corresponding jumper line 44 between the first and the second terminals 41 and 42 while each of the connection lines is put into the high level state by disconnecting the corresponding jumper line 44. A combination of the low and high level states is determined by the code represented by the functional mode information signal which should be memorized in the memory unit 38 as a memorized content. When either functional extension or functional modification is effected on the hardware of the first terminal station 11-1, the memorized content of the memory unit 38 is updated by changing a combination of connection and disconnection of the jumper lines 44.

Another EEPROM may be used instead of the memory unit 38. At any rate, a combination of the EEPROM 37 and the memory unit 38 acts as a functional mode information memory for memorizing the functional mode information signal.

Attention will be directed to the functional mode information communicating arrangement for use in the central control station 10. The functional mode information communicating arrangement for use in the central control station 10 comprises a functional mode information management circuit 45 (Fig. 1) for producing a transfer request signal representative of a request for transferring the functional mode information signal from the first terminal station 11-1 to the central control station 10. When necessity of transfer of the functional mode information signal of the first terminal station 11-1 arises in the central control station 10 on carrying out centralized management of the functional mode of the first terminal stations 11-1, the functional mode information management circuit 45 produces the transfer request signal directed to the first terminal station 11-1 and delivers the transfer request signal to the first satellite access controller 24-1.

Responsive to the transfer request signal directed to the first terminal station 11-1, the first satellite access controller 24-1 transmits the transfer request signal to the first terminal station 11-1 through the first central modem 23-1, the intermediate frequency divider 22, and the central radio transceiver 21 by the use of the first downward channel DC-1 (Fig. 2). The transfer request signal directed to the first terminal station 11-1 is transmitted with the transfer request signal kept in the control data of the control field of the downward signal illustrated in Fig. 3.

Thus, the first satellite access controller 24-1 serves, in cooperation with the first central modem 23-1, the intermediate frequency divider 22, and the central radio transceiver 21, as a first central communication section connected to the functional mode information management circuit 45 for transmitting the transfer request signal to one of the terminal stations 11 of the first station group 20-1 through the first downward channel DC-1.

Likewise, the second satellite access controller 24-2 serves, in cooperation with the second central modem 23-2, the intermediate frequency divider 22, and the central radio transceiver 21, as a second central communication section connected to the functional mode information management circuit 45 for transmitting another transfer request signal to one of the terminal stations 11 of the second station group 20-2 through the second downward channel DC-2 while the N-th satellite access controller 24-N serves, in cooperation with the N-th central modem 23-N, the intermediate frequency divider 22, and the central radio transceiver 21, as an N-th central communication section connected to the functional mode information management circuit 45 for transmitting still another transfer request signal to one of the terminal stations of the N-th station group 20-N through the N-th downward channel DC-N.

Attention will again be directed to the functional mode information communicating arrangement for use in the first terminal station 11-1. In the first terminal station 11-1, the media access controller 29 of the terminal communication device 18 receives the transfer request signal from the central control station 10 through the first downward channel DC-1, the terminal radio transceiver 25, and the terminal modem 26 and detects the transfer request signal directed to the first terminal station 11-1. Thus, the media access controller 29 serves, in combination with the terminal radio transceiver 25 and the terminal modem 26, as a terminal communication section for receiving a transfer request signal from the central control station 10 through the first downward channel DC-1. The functional mode information communicating arrangement for use in the first terminal station 11-1 further comprises the terminal communication section.

When the media access controller 29 detects the transfer request signal directed to the first terminal station 11-1, the media access controller 29 delivers the transfer request signal to the CPU 34 of the main processor unit 30. Responsive to the transfer request signal, the CPU 34 accesses the EEPROM 37 at first to read the functional mode information signal out of the EEPROM 37 as an ROM read-out signal. Thereafter, the CPU 34 accesses the buffer 39 of the memory unit 38 to read the functional mode information signal out of the memory unit 38 as a memory unit read-out signal. The ROM read-out signal and the memory unit read-out signal are collectively delivered to the media access controller 29 as a read-out mode information signal. Thus, the CPU 34 is operable as a reading circuit connected to the functional mode information memory and to the terminal communication section for reading, in response to the transfer request signal, the functional mode information signal out of the functional mode information memory as the read-out mode information signal.

Responsive to the read-out mode information signal, the media access controller 29 transmits the read-out mode information signal to the central control station 10 through the terminal modem 26 and the terminal radio transceiver 25 by the use of the first upward channel UC-1 (Fig. 2) with the read-out mode information signal kept in the upward data of the upward packet of the upward signal illustrated in Fig. 3. The upward signal comprising the read-out mode information signal is referred to as a transmitted mode information signal. As is apparent from the above, the terminal communication section is furthermore for transmitting the read-out mode information signal to the central control station 10 through the first upward channel UC-1 as the transmitted mode information signal.

Attention will again be directed to the functional mode information communicating arrangement for use in the central control station 10. In the central control station 10, the satellite access controller 24-1 receives, as a received mode information signal, the transmitted mode information signal through the first upward channel UC-1, the central radio transceiver 21, the intermediate frequency divider 22, and the first central modem 23-1. The satellite access controller 24-1 delivers the received mode information signal to the functional mode information management circuit 45. Thus, the central communication section is furthermore for receiving the transmitted mode information signal through the radio channel as the received mode information signal to deliver the received mode information signal to the functional mode information management circuit 45. The functional mode information management circuit 45 manages the received mode information signal delivered from the central communication section.

The functional mode information management circuit 45 can simultaneously transmit the transfer request signal to all of the terminal stations 11 of the first station group 20-1 through the first satellite access controller 24-1 in a broadcast mode. In addition, the functional mode information management circuit 45 can simultaneously transmit the transfer request signal to all of the terminal stations of all station groups 20 through the first through the N-th satellite access controllers 24-1 to 24-N in another broadcast mode.

In accordance with the functional mode information communicating system, the central control station 10 can immediately obtain the functional mode information signal of one of the terminal stations 11 of the radio communication network when necessity of obtaining the functional mode information signal of the terminal station in question arises. The necessity arises, for example, when either functional extension or functional modification is made in the terminal station in question. Thus, it is possible to rapidly respond to a request for obtaining the functional mode information signal in the functional mode communicating system. On carrying out management of the functional mode information signals by the use of a data base realized by a computer, the functional mode communicating system is effective in that it is possible to facilitate management of the data base.

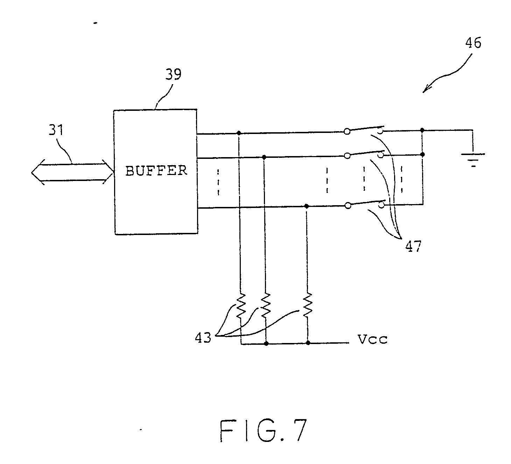

Turning to Fig. 7, another memory unit 46 may be used instead of the memory unit 38 illustrated in Fig. 6. The memory unit 46 has a plurality of toggle switches 47 instead of the jumper lines 44 of the memory unit 38 illustrated in Fig. 6. The code of the functional mode is memorized in the memory unit 46 by putting each of the toggle switches 47 into either an on state or an off state.

## Claims

1. A functional mode information communicating arrangement for use in a terminal station of a radio communication network comprising a central control station, said terminal and said central control stations being for carrying out communication with each other through a radio channel, wherein the arrangement comprises:
a memory for memorizing a functional mode information signal representative of a functional mode of said terminal station;
terminal communication means for receiving a transfer request signal from said central control station through said radio channel, said transfer request signal being representative of a request of transfer of said functional mode information signal to said central control station; and
reading means connected to said memory and to said terminal communication means and responsive to said transfer request signal for reading said functional mode information signal out of said memory as a read-out mode information signal;
said terminal communication means being for transmitting said read-out mode information signal to said central control station through said radio channel.

2. A functional mode information communicating arrangement as claimed in Claim 1, said terminal station having a specific feature, wherein said functional mode information signal represents said specific feature as said functional mode.

3. A functional mode information communicating arrangement for use in a central control station of a radio communication network comprising a terminal station, said central control and said terminal stations being for carrying out communication with each other through a radio channel, said terminal station having a functional mode, wherein the arrangement comprises:

a functional mode information management circuit for producing a transfer request signal representative of a request for transferring a functional mode information signal representative of said functional mode from said terminal station to said central control station as a transmitted mode information signal; and

central communication means connected to said functional mode information management circuit for transmitting said transfer request signal to said terminal station through said radio channel and for receiving said transmitted mode information signal through said radio channel as a received mode information signal to deliver said received mode information signal to said functional mode information management circuit;

said functional mode information management circuit being for managing the received mode information signal delivered from said central communication means.

4. A functional mode information communicating arrangement as claimed in Claim 3, said terminal station having a specific feature, wherein said functional mode information signal represents said specific feature as said functional mode.

5. In a functional mode information communicating system for use in a radio communication network for carrying out communication between a terminal station and a central control station through a radio channel, said terminal station having a functional mode, wherein:

said terminal station comprises:

a memory for memorizing a functional mode information signal representative of said functional mode;

terminal communication means for receiving a transfer request signal from said central control station through said radio channel, said transfer request signal being representative of a request of transfer of said functional mode information signal to said central control station; and

reading means connected to said memory and to said terminal communication means and responsive to said transfer request signal for reading said functional mode information signal out of said memory as a read-out mode information signal;

said terminal communication means being for transmitting said read-out mode information signal to said central control station through said radio channel as a transmitted mode information signal;

said central control station comprising:

a functional mode information management circuit for producing said transfer request signal; and

central communication means connected to said functional mode information management circuit for transmitting said transfer request signal to said terminal station through said radio channel and for receiving said transmitted mode information signal through said radio channel as a received mode information signal to deliver said received mode information signal to said functional mode information management circuit;

said functional mode information management circuit being for managing the received mode information signal delivered from said central communication means.

6. A functional mode information communicating system as claimed in Claim 5, said terminal station having a specific feature, wherein said functional mode information signal represents said specific feature as said functional mode.

FIG. 1

EP 0 331 162 A2

UPWARD CHANNELS          DOWNWARD CHANNELS

| UC-1 | | UC-2 | - - - | UC-N |   | DC-1 | | DC-2 | - - - | DC-N |

FREQUENCY

## FIG.2

TDMA FRAME

UPWARD
SIGNAL

| UP-1 | | UP-2 | | UP-3 |

| PREAMBLE SIGNAL | UPWARD HEADER | UPWARD DATA |

TDMA FRAME

DOWNWARD
SIGNAL

| CONTROL FIELD | DP-1 | DP-2 | DP-3 |

| UNIQUE WORD | CONTROL DATA | DOWNWARD HEADER | DOWNWARD DATA |

## FIG.3

FIG.4

FIG.5

FIG.6

EP 0 331 162 A2

FIG.7